# EUROPEAN PATENT SPECIFICATION

(11) **EP 3 162 134 B1**
(45) Date of publication and mention of the grant of the patent: **30.12.2020**
(21) Application number: 14755137.8
(22) Date of filing: 27.06.2014
(51) Int. Cl.: H04W 56/00

(54) **INTER-RNC TRANSPORT CHANNEL SYNCHRONIZATION**
TRANSPORTKANALSYNCHRONISATION ZWISCHEN FUNKNETZSTEUERUNGSEINHEITEN
SYNCHRONISATION DE CANAL DE TRANSPORT INTER-RNC

(43) Date of publication of application: 03.05.2017
(73) Proprietor: Telefonaktiebolaget LM Ericsson (publ), 164 83 Stockholm (SE)
(72) Inventor: JOVANOVIC, Aleksandar, SE-168 53 Bromma (SE); JABLONSKI, Jakub, 91-371 Lodz (PL)
(74) Representative: Ericsson
(86) International application number: PCT/IB2014/062681
(87) International publication number: WO 2015/198101

(56) References cited:
- EP-A1- 1 161 004
- EP-A1- 1 643 784
- WO-A1-2008/088592
- HUAWEI: "Enable node synchronization is supported by the user plane protocols for HS-DSCH", 3GPP DRAFT; R3-081916_ENABLE NODE SYNCHRONIZATION IS SUPPORTED BY THE USER PLANE PROTOCOLS FOR HS-DSCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jeju Island; 20080818 - 20080822, 13 August 2008 (2008-08-13), XP050609652, [retrieved on 2008-08-13]

## Description

### TECHNICAL FIELD

The present disclosure relates to synchronization, and more particularly to determining communication link delays, and using such delays in performing transport channel synchronization.

### BACKGROUND

Wireless communication networks have traditionally relied upon macro base stations to support relatively large macro cells. However, in order to increase capacity in wireless communication networks, smaller non-macro base stations are being deployed that support "small cells" such as pico cells, femto cells, etc. These small cells are deployed in addition to existing macro cells to increase network capacity and coverage. In some instances, a single Radio Network Controller (RNC) may support a large number of non-macro base stations throughout a wireless communication network (i.e., include those base stations in its Radio Network Subsystem "RNS"). The term RNS refers to one or more RNCs and the base stations that are supported by the one or more RNCs. A RNS is responsible for the resources and for transmission and reception in a set of cells.

According to 3GPP standards (e.g., ETSI TS 125.427 and TS 125.402), a serving RNC (SRNC) performs initial transport channel synchronization when adding a new radio link for a call, as part of the dedicated radio link setup procedure. Because handover in which a given link is added may be performed quite frequently, such transport channel synchronization may be frequently needed. Without performance of such synchronization, it is possible that packets will be dropped due to arriving at their destination outside of an acceptable reception window. Transport channel synchronization is performed by a given RNC between the RNC and all base stations in the so-called "active set" (i.e., all base stations that a given wireless terminal is simultaneously connected to). In some instances, when adding a new radio link at soft handover, an existing transport channel synchronization, which uses an old timing, can still be used. This is more likely to be true in a network that has small transport delays. However, when adding a radio link that exhibits a larger transport delay, transport channel synchronization may need to be reinitialized.

In Universal Mobile Telecommunications System (UMTS) networks, if a new radio link includes a base station supported by a different RNC, such as a drift RNC (DRNC), the SRNC performs transport channel synchronization by sending a synchronization control frame to the base station of the new leg, receiving a response from the base station, and calculating the round trip time (RTT) between the SRNC and the base station of the new leg.

The interface between a RNC and a base station is known as the "lub" interface, whereas the interface between two RNCs is known as the "lur" interface. Handovers between cells with different delays belonging to different RNCs are quite common. Delays on the lur interface are usually rather short as they typically include a good quality transport connection (e.g., a carrier grade connection). Delays on lub interfaces, however, can vary considerably because the quality of transport solutions connecting a given base station to its corresponding RNC can vary. A given lub interface may include a fiber optic, asymmetric digital subscriber line (ADSL), or very-high-bit-rate digital subscriber line (VDSL) connection, for example, and these exhibit varying amounts of delay. Moreover, when a given RNC supports a large number of small cells, those lub interface can vary to an even greater degree, because it is more likely that a non-carrier grade link will be used for the lub interface of a small cell. In view of this, the RTT time calculations performed in connection with transport channel synchronization can cause considerable delays when adding call legs. The European patent application EP 1643784 discloses a RNC which determines the delays between itself and all NodeBs in an active set.

### SUMMARY

The invention is defined in the independent claims. Advantageous embodiments are set out in the dependent claims. According to one aspect of the present disclosure, a method is implemented by a first Radio Network Controller (RNC) (e.g., a DRNC), in which the RNC determines a communication link delay of a base station supported by the first RNC. Subsequent to the determining, a request is received from a different, second RNC (e.g., a SRNC) to add a call leg that includes the base station for a call supported by the second RNC. Based on the request, a response is transmitted to the second RNC that indicates the determined communication link delay.

In one or more embodiments, the communication link delay is an lub interface delay. In one or more embodiments, the request is a Radio Network Subsystem Application Part (RNSAP) request, and the response is a RNSAP response.

According to another aspect of the present disclosure, a request is transmitted from a first RNC (e.g., a SRNC) to a different, second RNC (e.g., a DRNC) to add a call leg that includes a base station supported by the second RNC for a call of a wireless terminal supported by the first RNC. The first RNC receives a response from the second RNC that indicates a predetermined communication link delay for the base station. The first RNC performs transport channel synchronization for the wireless terminal based on a set of communication link delays that includes the predetermined communication link delay. The predetermined communication link delay is predetermined prior to the transmitting.

In one or more embodiments, the communication link delay is an lub interface delay. In one or more embodiments, the request is a RNSAP request, and the response is a RNSAP response.

In one or more embodiments, to perform transport channel synchronization, the first RNC determines a maximum of the communication link delays in the set, and performs one or both of: adjusting a connection frame number (CFN) of the first RNC based on the maximum delay, and adjusting a transmission time of a data frame that is transmitted from the first RNC based on the maximum delay.

According to another aspect of the present disclosure, a first RNC (e.g., a DRNC) includes a memory circuit and one or more processing circuits. The one or more processing circuits are configured to determine a communication link delay of a base station supported by the first RNC, and store the determined communication link delay in the memory circuit. The one or more processing circuits are further configured to, subsequent to the determination of the communication link delay, receive a request from a different, second RNC (e.g., a SRNC) to add a call leg that includes the base station for a call supported by the second RNC. Based on the request, the one or more processing circuits are configured to transmit a response to the second RNC that indicates the determined communication link delay.

In one or more embodiments, the communication link delay is an lub interface delay. In one or more embodiments, the request is a RNSAP request, and the response is a RNSAP response.

According to another aspect of the present disclosure, a first RNC (e.g., a SRNC) includes a memory circuit configured to store communication link delays, and one or more processing circuits. The one or more processing circuits are configured to transmit a request from the first RNC to a different, second RNC (e.g., a DNRC) to add a call leg that includes a base station supported by the second RNC for a call of a wireless terminal supported by the first RNC. The one or more processing circuits are further configured to receive a response from the second RNC that indicates a predetermined communication link delay for the base station, and perform transport channel synchronization for the wireless terminal based on a set of communication link delays that includes the predetermined communication link delay. The predetermined communication link delay is predetermined prior to the transmission of the request.

In one or more embodiments, the communication link delay is an lub interface delay. In one or more embodiments, the request is a RNSAP request, and the response is a RNSAP response.

In one or more embodiments, to perform transport channel synchronization, the one or more processing circuits are configured to determine a maximum of the communication link delays in the set, and perform one or both of: adjusting a CFN of the first RNC based on the maximum delay, and adjusting a transmission time of a data frame that is transmitted from the first RNC based on the maximum delay.

According to another aspect of the present disclosure, a method is implemented by a first RNC (e.g., a DRNC). The first RNC determines a communication link delay for each of a first base station and a second base station supported by the first RNC. The first base station is included in a first call leg of a call supported by a different, second RNC (e.g., a SRNC), and the second base station is included in a second leg of the call. Subsequent to the determining, the first RNC receives a request from the second RNC to delete the first call leg. Based on the request, the first RNC transmits a response to the second RNC that indicates the determined communication link delay for the second base station which is still part of the call.

In one or more embodiments, each communication link delay is an lub interface delay. In one or more embodiments, the request is a RNSAP request, and the response is a RNSAP response.

According to another aspect of the present disclosure, a method is implemented by a first RNC (e.g., a SRNC). The first RNC establishes a call for a wireless terminal supported by the first RNC. The call includes first and second call legs supported by a different, second RNC (e.g., a DRNC). The first call leg includes a first base station supported by the second RNC, and the second call leg includes a second base station supported by the second RNC. The first RNC transmits a request to the second RNC to delete the first call leg. The first RNC receives a response from the second RNC that indicates a predetermined communication link delay for the second base station. The first RNC performs transport channel synchronization for the wireless terminal based on a set of communication link delays that includes the predetermined communication link delay for the second base station. The predetermined communication link delay is predetermined prior to the transmitting.

In one or more embodiments, each communication link delay is an lub interface delay. In one or more embodiments, the request is a RNSAP request, and the response is a RNSAP response.

In one or more embodiments, to perform transport channel synchronization, the first RNC determines a maximum of the communication link delays in the set, and performs one or both of: adjusting a connection frame number (CFN) of the first RNC based on the maximum delay, and adjusting a transmission time of a data frame that is transmitted from the first RNC based on the maximum delay.

According to another aspect of the present disclosure, a first RNC (e.g., a DRNC) includes a memory circuit and one or more processing circuits. The one or more processing circuits are configured to determine a communication link delay for each of a first base station and a second base station supported by the first RNC, and store the determined communication link delay in the memory circuit. The first base station is included in a first call leg of a call supported by a different second RNC, and the second base station is included in a second leg of the call. The one or more processing circuits are further configured to, subsequent to the determination of the communication link delays, receive a request from the second RNC to delete the first call leg; and based on the request, transmit a response to the second RNC that indicates the determined communication link delay for the second base station which is still part of the call.

In one or more embodiments, each communication link delay is an lub interface delay. In one or more embodiments, the request is a RNSAP request, and the response is a RNSAP response.

According to another aspect of the first closure, a first RNC (e.g., a SRNC) includes a memory circuit configured to store communication link delays, and one or more processing circuits. The one or more processing circuits are configured to establish a call for a wireless terminal supported by the first RNC. The call includes first and second call legs supported by a different, second RNC. The first call leg includes a first base station supported by the second RNC, and the second call leg includes a second base station supported by the second RNC. The one or more processing circuits are further configured to transmit a request to the second RNC to delete the first call leg, and receive a response from the second RNC that indicates a predetermined communication link delay for the second base station. The one or more processing circuits are further configured to perform transport channel synchronization for the wireless terminal based on a set of communication link delays that includes the predetermined communication link delay for the second base station. The predetermined communication link delay is predetermined prior to the transmission of the request.

In one or more embodiments, each communication link delay is an lub interface delay. In one or more embodiments, the request is a RNSAP request, and the response is a RNSAP response.

In one or more embodiments, to perform transport channel synchronization, the first RNC determines a maximum of the communication link delays in the set, and performs one or both of: adjusting a connection frame number (CFN) of the first RNC based on the maximum delay, and adjusting a transmission time of a data frame that is transmitted from the first RNC based on the maximum delay.

Of course, the present disclosure is not limited to the above features and advantages. Indeed, those skilled in the art will recognize additional features and advantages upon reading the following detailed description, and upon viewing the accompanying drawings.

### BRIEF DESCRIPTION OF THE DRAWINGS

Fig. 1 illustrates an example wireless communication network that includes multiple Radio Network Subsystems (RNSs).
Fig. 2 is a signaling diagram illustrating a procedure for performing transport channel synchronization in a wireless communication network.
Fig. 3 is a flowchart for an example method implemented by a RNC.
Fig. 4 is a flowchart for another example method implemented by a RNC.
Fig. 5 illustrates a number of example communication delays in a wireless communication network.
Fig. 6 is a flowchart for another example method implemented by a RNC.
Fig. 7 is a flowchart for another example method implemented by a RNC.
Fig. 8 illustrates an example Radio Network Controller (RNC).

### DETAILED DESCRIPTION

The present disclosure describes techniques for performing or supporting the performance of transport channel synchronization in networks with varying transport characteristics. Each RNC measures the transmission delays to the respective base stations in its own Radio Network Subsystem (RNS) in the background, without prompting from another RNC or base station (e.g., without receiving a synchronization control frame prompting such a determination). A given RNC (e.g., a DRNC), may be asked for the communication link delay between itself and a base station that is to be added to the active set for a wireless terminal supported by another RNC (e.g., a SRNC). Upon receiving such a request, the DRNC sends, to the SRNC, the predetermined delay value for one of its base stations that is identified in the request. The SRNC can use the predetermined delay value when performing transport channel synchronization (e.g., on a dedicated transport channel "DCH") at the establishment of a new radio link. In one or more embodiments, predetermined delay values are shared using Radio Network Subsystem Application Part (RNSAP) signaling over the lur interface between the RNCs. By using predetermined communication link delays, call set up times can be considerably improved.

The techniques discussed herein decrease call setup times and soft handover times, as transport delays do not need to be measured at radio link establishment. Instead, they are measured in the background prior to performance of radio link establishment. The predetermined communication link delay can be sent to the SRNC using a "Radio Link Addition Response" or "Radio Link Setup Response," for example. The response may be sent in response to a "Radio Link Addition Request" or "Radio Link Setup Request." A "Radio Link Addition Request" and "Radio Link Addition Response" are used when there is already one or more existing radio links in a DRNC for a given call. In contrast, a "Radio Link Setup Request" and "Radio Link Setup Response" are used when there is not already one or more existing radio links in the DRNC for a given call. As used herein, a "call" can refer to a voice call and/or a data call, and is not limited to just voice calls. Also, "adding a call leg" can refer to either a "Radio Link Addition" or "Radio Link Setup."

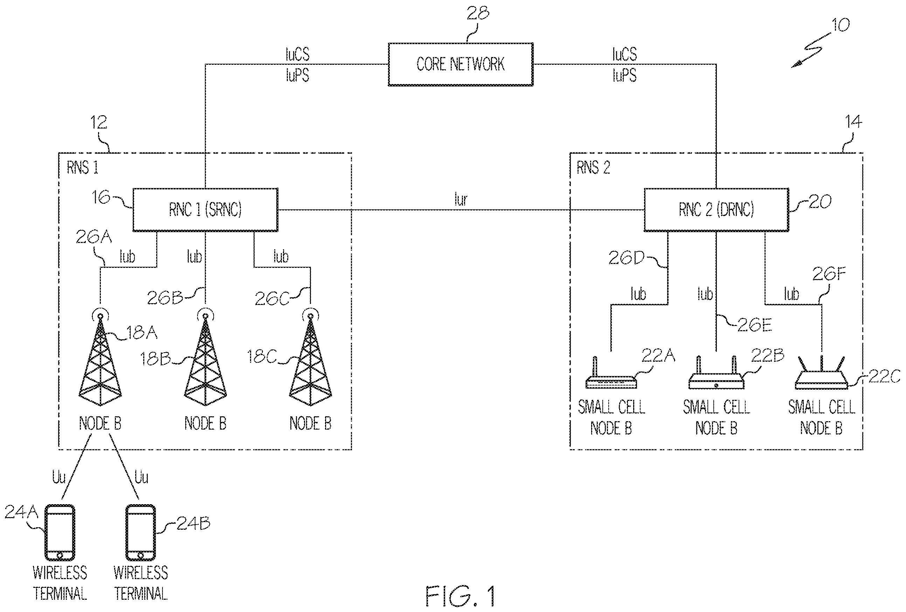

With this in mind, Fig. 1 illustrates an example UMTS network 10 which includes a first RNS 12, and a second RNS 14. As discussed above, a RNS is responsible for the resources and for transmission and reception in a set of cells. The first RNS 12 includes RNC 16 and base stations 18A-C, while the second RNS 14 includes RNC 20 and base stations 22A-C. A base station is known as a "NodeB" in UMTS terminology. For the discussion below, assume that RNC 16 acts as a SRNC, and that RNC 20 acts as a DNRC with respect to wireless terminals 24A-B. Each base station 18, 22 communicates with its respective RNC 16, 20 over a respective lub interface 26. Thus, the lub interface 26 serves as a communication link between a given RNC and a base station supported by the RNC. The interface between each RNC 16, 22 is known as the lur interface. Each RNC communicates with a core network 28 portion of the wireless communication network 10 using an luCS and/or an luPS interface.

As shown in Fig. 1, wireless terminals 24A-B communicate with each other via a single base station 18A, so the only lub interface that is implicated is lub interface 26A. However, if wireless terminal 24B is handed over to base station 22A in a soft handover (such that RNC 16 acts as SRNC and RNC 20 acts as DRNC), then the delay of lub interface 26D must also be considered. In the prior art, determination of the delay of a DRNC lub interface would have involved sending a synchronization control frame to the base station of the new leg, receiving a response from that base station, and calculating the round trip time (RTT) of between the SRNC and the base station of the new leg. Also, this would have been performed during establishment of the new call leg that includes base station. The methods and apparatus discussed herein present improvements over this prior art technique.

The term "wireless terminal" is used herein to refer generally to a device that attaches to a wireless communication network, and can include a User Equipment (UE) as that term is used by the 3rd Generation Partnership Project (3GPP). A wireless terminal can include a standalone wireless device (e.g., a cellphones and/or wireless-equipped personal digital assistant), as well as a wireless card designed for attachment to or insertion into another electronic device, such as a personal computer. Also, although the base stations 22A-C are illustrated as small cell base stations, it is understood that this is only an example, and that the techniques discussed herein could still be applied even if all cells were macro cells supported by macro base stations.

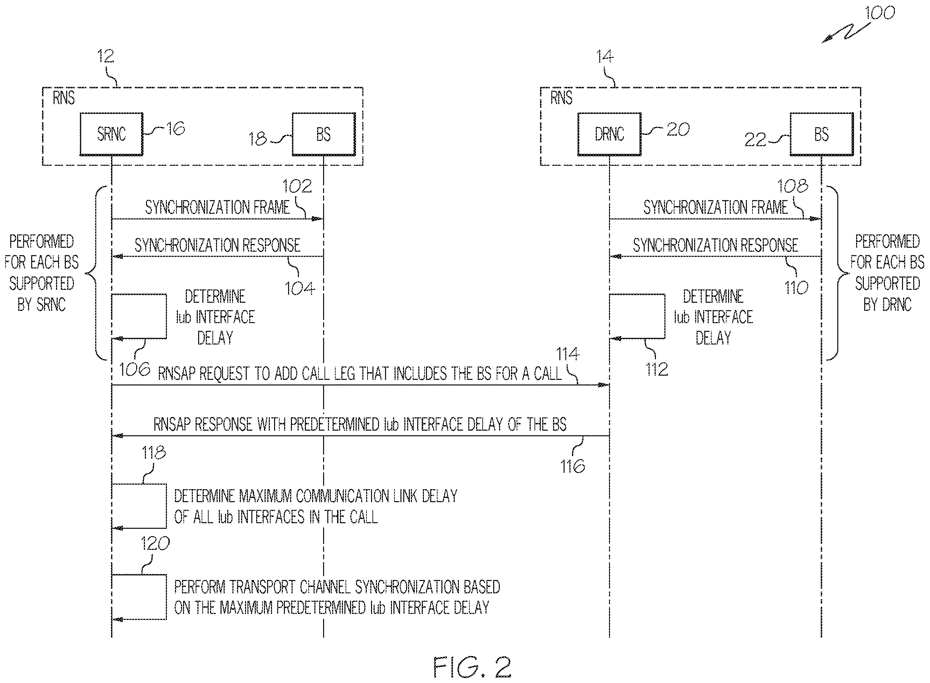

Fig. 2 is a signaling diagram illustrating a procedure 100 for performing transport channel synchronization in a wireless communication network. SRNC 16 sends a synchronization frame to its supported base station 18 (102), and the base station 18 correspondingly sends a synchronization response (104). Based on the synchronization response, the SRNC 16 determines an lub interface delay of the base station 18. This may be performed, for example, according to §5.3 or §5.5 of 3GPP TS 25.427. In some embodiments, items 102-106 are performed for each base station 18 supported by the SRNC 16 (e.g., base stations 18A-C in Fig. 1). Also, items 102-106 are performed as background processing, before the lub interface delays are needed to perform transport channel synchronization. As such, when the lub interface delay is needed, it is already predetermined and readily available. Thus, the delays may be predetermined autonomously, without request by a companion RNC (e.g., a SRNC).

Likewise, the DRNC 20 sends a synchronization frame to its supported base station 22 (108), and the base station 22 correspondingly sends a synchronization response (110). Based on the synchronization response, the DRNC 20 determines an lub interface delay of the base station 22. This may be performed, for example, according to §5.3 or §5.5 of 3GPP TS 25.427. Notably though, items 108-112 are performed for each base station 22 supported by the SRNC 16 (e.g., base stations 22A-C in Fig. 1). In some embodiments, items 108-112 are performed as background processing, before the lub interface delays are actually needed for transport channel synchronization. As such, when the lub interface delay is needed, it is already predetermined and readily available. Items 102-106 and 108-112 may be performed concurrently, or may be performed in different orders such that 102-106 may precede or follow 108-112.

Subsequent to the determination of the lub interface delays, the SRNC 16 transmits a Radio Network Subsystem Application Part (RNSAP) request to the DRNC 20 over the lur interface between the RNCs 16, 20 requesting that a call leg be added that includes a base station 22 supported by the DRNC 20 for a call supported by the SRNC 16 (114). Based on the request, the DRNC 20 provides a RNSAP response over the lur interface that includes a predetermined lub interface delay of the base station 22 indicated in the request of 114 (116). The SRNC 16 determines a maximum communication link delay of a set of lub interface delays of all lub interfaces implicated in the call (118), and then performs transport channel synchronization based on the maximum predetermined lub interface delay in the set (120). Thus, in some embodiments the "set" of communication link delays may be the "active set" for a given wireless terminal (e.g., each base station that the wireless terminal is connected to or is going to be connected to).

In some embodiments, the performance of transport channel synchronization includes adjusting a connection frame number (CFN) of the SRNC 16 based on the maximum delay and/or adjusting a transmission time of a data frame that is transmitted from the first RNC based on the maximum delay. The CFN serves a counter for transport channel synchronization. This may be performed as taught in WO 2014/070053, for example. As discussed in the '053 application, in some examples, a transmission time of a data frame may be adjusted if the delay at issue does not exceed a Transmission Time Interval (TTI), while the CFN adjustment may be performed if the delay does exceed a TTI.

In one or more embodiments, a technique such as a "sliding window average" may be used by a given RNC to achieve a better estimate of the predetermined communication link delays in its RNS. This may be useful in networks with large delay variation, for example. In such embodiments, the sliding window average determination may exclude the largest delays.

In some embodiments, when the SRNC is performing the determination of 118, the SRNC may add an lur delay to all predetermined lub interface delays received from the DRNC. The lur delay is assumed to be constant and is configured per lur link. The lur interface is typically carried on a good quality transport link, over which delay variation is assumed to be minimal. The lur delay may be a hard coded value or operator parameter, for example, and thus may be configured by a given network operator. Alternatively, the lur delay may be measured between two RNCs 16, 20 instead of being hard coded.

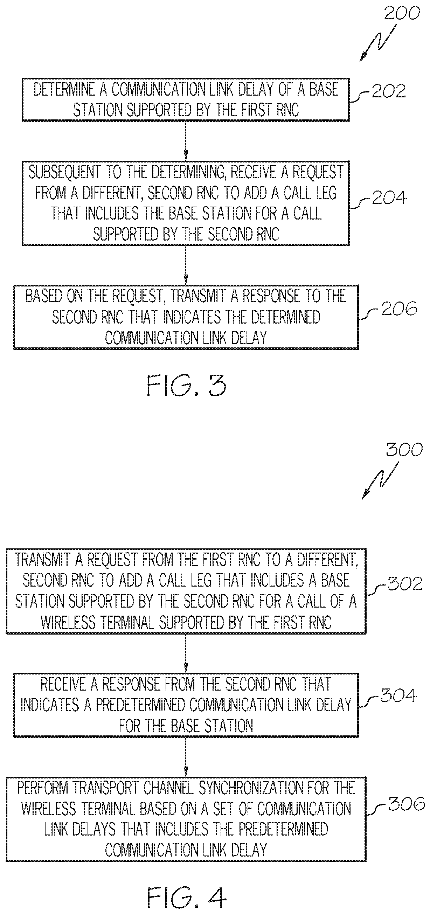

Figs. 3-4 are flowcharts of example methods 200, 300 performed by RNCs. The procedure 100 of Fig. 2 is one example of an embodiment of each of the methods 200, 300. Referring first to Fig. 3, the method 200 is implemented by a first RNC (e.g., a DRNC). According to the method 200, the first RNC determines a communication link delay of a base station supported by the first RNC (e.g., base station 22A) (block 202). Subsequent to the determining, the first RNC receives a request from a different, second RNC (e.g., a SRNC) to add a call leg that includes the base station for a call supported by the second RNC (block 204). Based on the request, the first RNC transmits a response to the second RNC that indicates the determined communication link delay (block 204).

In one or more embodiments of the method 200, the determining of block 202 is performed to determine a communication link delay for each of a plurality of base stations supported by the first RNC (e.g., each of base stations 22A-C). In such embodiments, the response includes the determined communication link delay for each base station that is supported by the first RNC and that is identified in the request, and excludes the determined communication link delay for each base station that is supported by the first RNC but is not identified in the request. Thus, using the example of DRNC 20 of Fig. 1, the lub interface delay of lub interfaces 26D-F may be measured, but the communication link delays of lub interfaces 26E-F would be excluded if their corresponding base stations 22B, 22C were not identified in the request of block 204.

In some embodiments, the request (block 204) and response (block 206) are transmitted over the lur interface between the first and second RNCs, and each communication link delay is an lub interface delay. In some embodiments, the request is a Radio Network Subsystem Application Part (RNSAP) request, and the response is a RNSAP response. As shown in Fig. 1, one or more of the plurality of base stations may be non-macro base stations 22 that support small cells. Also, in some embodiments the first RNC acts as a DRNC with respect to a soft handover from the second RNC (which in turn may act as a SRNC).

Referring now to Fig. 4, a method 300 implemented by a RNC (e.g., a SRNC) is shown. The first RNC transmits a request from the first RNC to a different, second RNC (e.g., a DRNC) to add a call leg that includes a base station supported by the second RNC for a call of a wireless terminal supported by the first RNC (block 302). The first RNC receives a response from the second RNC that indicates a predetermined communication link delay for the base station (block 304). The first RNC performs transport channel synchronization for the wireless terminal based on a set of communication link delays that includes the predetermined communication link delay (block 306). The predetermined communication link delay is predetermined prior to the transmitting of block 302.

In some embodiments, the method 300 also includes determining one or more additional communication link delays that each correspond to a communication link of a respective base station supported by the first RNC that is part of a call leg for the call (e.g., a call leg that is already established or that is to be established for the call over one of the lub interfaces 26A-C). In such embodiments, this determining is performed prior to the transmitting of block 302, and the one or more additional communication link delays are included in the set of communication link delays.

In some embodiments, the performance of transport channel synchronization in block 206 includes determining a maximum of the communication link delays in the set; and performing one or both of: adjusting a CFN of the first RNC based on the maximum delay, and adjusting a transmission time of a data frame that is transmitted from the first RNC based on the maximum delay. As discussed above, whether the CFN is adjusted or the transmission time is adjusted may be based on whether the maximum transmission delay is greater than or less than a single TTI.

In some embodiments, the request of block 302 and the response of block 304 are transmitted over an lur interface between the first and second RNCs, and each communication link delay is an lub interface delay. In some embodiments, the request of block 302 is a RNSAP request, and the response of block 304 is a RNSAP response.

In some embodiments, the method 300 also includes adding a predefined lur interface delay of the lur interface between the first and second RNCs to the communication link delay for the base station supported by the second RNC to determine a modified communication link delay for the base station supported by the second RNC. In such embodiments, the determining a maximum of the communication link delays is performed based on the modified communication link delay.

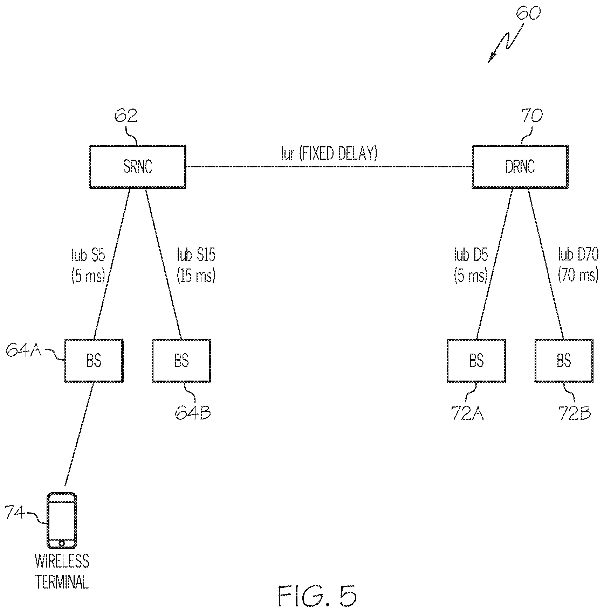

Some example implementations of the methods 200, 300 will now be discussed in connection with Fig. 5. Fig. 5 illustrates a wireless communication network 60 that includes a SRNC 62 that supports base stations 64A and 64B, and a DRNC 70 that supports base stations 72A and 72B. A wireless terminal 74 is supported by base station 64A and SRNC 62. The base stations 64, 72 have a variety of different lub interface delays. Base station 64A has an lub interface delay of 5 ms (labeled "S5"). Base station 64B has an lub interface delay of 15 ms (labeled "S15"). Base station 72A has an lub interface delay of 5 ms (labeled "D5"). Base station 72B has an lub interface delay of 70 ms (labeled D70). For the discussion below assume that a delay value will be represented with the variable epsilon (ε). Also, assume that the fixed lur delay is 2 ms.

Assume in a first scenario that a call has legs on lub S5 and lub S15, and that the SRNC 62 requests to create a new call leg on lub D5 with a RNSAP "Radio Link Setup Request" message. In this example, the set of communication link delays would include {S5, S15, D5}. The DRNC 70 would respond to the RNSAP request with a RNSAP response that includes a predetermined delay value ε = 5 ms for lub interface D5. Based on this, SRNC 62 would calculate a maximum delay using equation (1) below. ${ε}_{max} = max \left(S5,S15,D5+Iur delay\right)$ equation (1) Assuming a fixed lur delay of 2 ms, ε*ₘₐₓ* would equal 15 ms. The SRNC 62 would then perform transport channel synchronization based on the determined ε*ₘₐₓ* value.

Assume in a second scenario that a call has legs on lub S5 and lub S15, and that the SRNC 62 requests to create a new call leg on lub D70 with a RNSAP "Radio Link Setup Request" message. In this example, the set of communication link delays would include {S5, S15, D70}. The DRNC 70 would respond to the RNSAP request with a RNSAP response that includes a predetermined delay value ε = 70 ms for lub interface D70. Based on this, SRNC 62 would calculate a maximum delay using equation (2) below. ${ε}_{max} = max \left(S5,S15,D70+Iur delay\right)$ equation (2) Assuming a fixed lur delay of 2 ms, ε*ₘₐₓ* would equal 72 ms. The SRNC 62 would then perform transport channel synchronization based on the determined ε*ₘₐₓ* value.

Assume in a third scenario that a call has legs on lub S5 and lub D5, and that the SRNC 62 requests to create a new call leg on lub D70 with a RNSAP "Radio Link Addition Request" message. As discussed above, a "Radio Link Addition Request" is used when there is already one or more existing radio links in a DRNC for a given call (whereas a "Radio Link Setup Request" is used when there is not already an existing radio link in the DRNC for a given call). In this example, the set of communication link delays would include {S5, D5, D70}. The DRNC 70 would respond to the RNSAP request with a RNSAP response that includes a predetermined delay value ε = 70 ms for lub interface D70. Optionally, the delay value for D5 could also be reported (even though a recent value for it would already be known by the SRNC 62). Based on this, SRNC 62 would calculate a maximum delay using equation (3) below. ${ε}_{max} = max \left(S5,D5+Iur delay,D70+Iur delay\right)$ equation (3) Assuming a fixed lur delay of 2 ms, ε*ₘₐₓ* would equal 72 ms. The SRNC 62 would then perform transport channel synchronization based on the determined ε*ₘₐₓ* value.

Assume in a fourth scenario that a call has legs on lub S5, lub D5, and lub D70, and that the SRNC 62 requests to delete the call leg on lub D70 with a RNSAP "Radio Link Deletion Request" message. In this example, the set of communication link delays would include {S5, D5, D70}. The DRNC 70 would respond to the RNSAP request with a RNSAP response. Optionally, the response could include the delay value for D5 (even though a recent value for it would already be known by the SRNC 62). Based on this, SRNC 62 would calculate a maximum delay using equation (4) below. ${ε}_{max} = max \left(S5,D5+Iur delay\right)$ equation (4) Assuming a fixed lur delay of 2 ms, ε*ₘₐₓ* would equal 7 ms. The SRNC 62 would then perform transport channel synchronization based on the determined ε*ₘₐₓ* value.

Assume in a fifth scenario that base station 72A supports multiple cells: "cell A" (having lub interface delay D5a of 5 ms) and "cell B" (having lub interface delay D5b of 5 ms). Assume also that a call has legs on lub S5, and lub D5a. The SRNC 62 requests to create a new call leg in cell B (which implicates lub interface D5b) with a RNSAP "Radio Link Addition Request" message. In this example, the set of communication link delays would include {S5, D5a, D5b}. The DRNC 70 would respond to the RNSAP request with a RNSAP response, which would include the delay for D5b. Optionally, the response could include the delay value for D5a (even though a recent value for it would already be known by the SRNC 62). Based on this, SRNC 62 would calculate a maximum delay using equation (4) below. ${ε}_{max} = max \left(S5,D5a+Iur delay,D5b+Iur delay\right)$ equation (4) Assuming a fixed lur delay of 2 ms, ε*ₘₐₓ* would equal 7 ms. The SRNC 62 would then perform transport channel synchronization based on the determined ε*ₘₐₓ* value.

In some embodiments, the maximum delay ε value reported by DRNC for the same lub link can vary in time because the delay on the lub link is subject to variation. Referring to the fifth scenario above, the delay of the D5 interface could have a first value D5a when cell A was added to the call, and subsequently could have a different value D5b when cell B is added. In case of long-term variation, subsequent reports could change slowly. However, in case of a route change (i.e., when a router decides to route packets in a different way than they were previously routed), subsequent reports can be very different. Thus, there are occasions when it may be important to re-report the delay for a given lub interface.

In some embodiments, the predetermined radio link is reported using a custom information element (IE) named "Epsilon" (ε). Of course, this is only an example, and it is understood that a different custom IE name could be used (or that a non-custom IE could be used). In one or more embodiments, the custom IE is added as extension to "Radio Link Setup Response" and "Radio Link Addition Response" messages specified in 3GPP TS 25.423 §9.1.4.1 and §9.1.7.1 (e.g., as part of "RadioLinkSetupResponseFDD-Extensions" and "RadioLinkAdditionResponseFDD-Extensions").

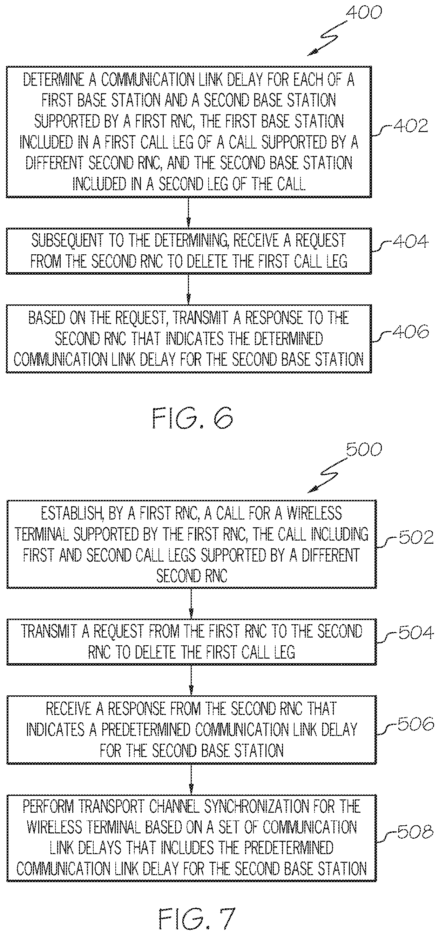

As discussed in the fourth scenario above, a predetermined communication link delay may be returned by the DRNC based on receipt of a "Radio Link Deletion Request." This scenario will now be discussed in connection with Figs. 6-7.

Fig. 6 is a flowchart for an example method 400 implemented by a first RNC (e.g., DRNC 70). The first RNC determines a communication link delay for each of a first base station and a second base station supported by the first RNC (block 402). These communication link delays could include delays D5 and D70 in the fourth scenario above, for example. The first base station (e.g., base station 72B) is included in a first call leg of a call supported by a different, second RNC (e.g., SRNC 62), and the second base station (e.g., base station 72A) is included in a second leg of the call. Subsequent to the determining of block 402, the first RNC receives a request from the second RNC to delete the first call leg (block 404). Based on the request, the first RNC transmits a response to the second RNC that indicates the determined communication link delay for the second base station (block 406) which is still part of the call. This could include, for example, the delay D5 in the fourth scenario above.

In some embodiments, the request of block 404 and the response of block 406 are transmitted over an lur interface between the first and second RNCs, and each communication link delay is an lub interface delay. In some embodiments, the request of block 404 is a RNSAP request, and the response of block 406 is a RNSAP response.

In one or more embodiments of the method 400, if three or more call legs of the call are supported by the first RNC (e.g., the DRNC 70), the indicated call leg is deleted, the DRNC determines which of its remaining call legs has the greatest communication link delay, and the DRNC returns that greatest communication link delay value to the second RNC in block 406.

Fig. 7 is a flowchart for another example method 500 implemented by a first RNC (e.g., SRNC 62). The first RNC establishes a call for a wireless terminal supported by the first RNC (e.g., wireless terminal 74) (block 502). The call includes first and second call legs supported by a different, second RNC (e.g., DRNC 70). The first call leg includes a first base station supported by the second RNC (e.g., base station 72B), and the second call leg includes a second base station supported by the second RNC (e.g., base station 72A). The first RNC transmits a request to the second RNC to delete the first call leg (block 504). The first RNC receives a response from the second RNC that indicates a predetermined communication link delay for the second base station (block 506). This could include the delay D5 in the fourth scenario above, for example. The first RNC performs transport channel synchronization for the wireless terminal based on a set of communication link delays that includes the predetermined communication link delay for the second base station (block 508). The predetermined communication link delay is predetermined prior to the transmitting of block 504.

In some embodiments, the request of block 504 and the response of block 506 are transmitted over an lur interface between the first and second RNCs, and each communication link delay is an lub interface delay. In some embodiments, the request of block 504 is a RNSAP request, and the response of block 506 is a RNSAP response.

As in the examples discussed above, the performance of transport channel synchronization (block 508) could include determining a maximum of the communication link delays in the set; and performing one or both of: adjusting a CFN of the first RNC based on the maximum delay, and adjusting a transmission time of a data frame that is transmitted from the first RNC based on the maximum delay. Whether the CFN is adjusted or the transmission time is adjusted may be based on whether the maximum transmission delay is greater than or less than a single TTI, for example.

In one or more embodiments of the method 500, if three or more call legs of the call are supported by the second RNC (e.g., the DRNC 70), the indicated call leg is deleted, and the DRNC communication link delay received from the DRNC in block 506 is for whichever of the remaining call legs of the DRNC that has the greatest communication link delay value.

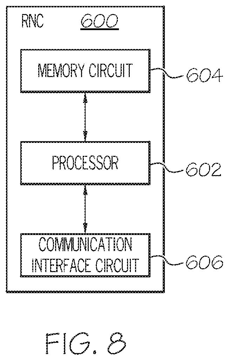

Fig. 8 illustrates an example Radio Network Controller (RNC) 600 configured to carry out one of more of the techniques discussed above (e.g., any combination of the methods 200, 300, 400, 500). The RNC includes one or more processing circuits (shown as "processor" 602), a memory circuit 604, and a communication interface circuit 606.

The processor 602 includes one or more processing circuits, including, for example, one or more microprocessors, microcontrollers, digital signal processors, or the like, and is configured with appropriate software and/or firmware to carry out one or more of the techniques discussed above. The memory circuit 604 is configured to store communication link delays (e.g., lub interface delays and lur interface delays). The memory circuit 60 4may also store program instructions and other additional data needed by the processor 602 to perform its functions. The memory circuit 604 may, for example, include a non-volatile memory device such an electrically erasable programmable read only memory (EEPROM), flash memory, or magnetoresistive random access memory (MRAM). Of course, a volatile memory device, such a random access memory (RAM), may also be used to store the communication link delays. The communication interface circuit 606 includes circuitry configured to communicate with other RNCs and with base stations supported by the RNC 600.

In one embodiment, the RNC 600 is a "first RNC" (e.g., a DRNC), and the one or more processing circuits of processor 602 are configured to determine a communication link delay of a base station supported by the first RNC, and store the determined communication link delay in the memory circuit 604. The one or more processing circuits are further configured to, subsequent to the determination of the communication link delay, receive a request from a different, second RNC (e.g., a SRNC) to add a call leg that includes the base station for a call supported by the second RNC; and based on the request, transmit a response to the second RNC that indicates the determined communication link delay.

In the same or another embodiment, the RNC 600 is a "first RNC" (e.g., a SRNC) and the one or more processing circuits of processor 602 are configured to transmit a request from the first RNC to a different, second RNC (e.g., a DRNC) to add a call leg that includes a base station supported by the second RNC for a call of a wireless terminal supported by the first RNC. The one or more processing circuits are further configured to receive a response from the second RNC that indicates a predetermined communication link delay for the base station, and perform transport channel synchronization for the wireless terminal based on a set of communication link delays that includes the predetermined communication link delay. The predetermined communication link delay is predetermined prior to the transmission of the request.

As discussed above, performance of transport channel synchronization can include determining a maximum of the communication link delays in the set; and performing one or both of: adjusting a CFN of the first RNC (e.g., the SRNC) based on a maximum lub interface delay of all lub interfaces implicated in the call, and/or adjusting a transmission time of a data frame that is transmitted from the first RNC based on the maximum delay.

In one embodiment, the RNC 600 is a "first RNC" (e.g., a DRNC), and the one or more processing circuits of processor 602 are configured to determine a communication link delay for each of a first base station and a second base station supported by the first RNC, and store the determined communication link delay in the memory circuit 604. These communication link delays could include delays D5 and D70 in the fourth scenario above, for example. The first base station (e.g., base station 72B) is included in a first call leg of a call supported by a different, second RNC (e.g., SRNC 62), and the second base station (e.g., base station 72A) is included in a second leg of the call. The one or more processing circuits are further configured to, subsequent to the determination of the communication link delays, receive a request from the second RNC to delete the first call leg; and based on the request, transmit a response to the second RNC that indicates the determined communication link delay for the second base station which is still part of the call. This could include, for example, the delay D5 in the fourth scenario above.

In some embodiments, the request and response are transmitted over an lur interface between the first and second RNCs, and each communication link delay is an lub interface delay. In some embodiments, the request is a RNSAP request, and the response is a RNSAP response.

In one or more embodiments, if three or more call legs of the call are supported by the first RNC (e.g., the DRNC 70), the indicated call leg is deleted, the DRNC determines which of its remaining call legs has the greatest communication link delay, and the DRNC returns that greatest communication link delay value to the second RNC.

In the same or another embodiment, the RNC 600 is a "first RNC" (e.g., a SRNC) and the one or more processing circuits of processor 602 are configured to establish a call for a wireless terminal supported by the first RNC (e.g., wireless terminal 74). The call includes first and second call legs supported by a different, second RNC (e.g., DRNC 70). The first call leg includes a first base station supported by the second RNC (e.g., base station 72B), and the second call leg includes a second base station supported by the second RNC (e.g., base station 72A). The one or more processing circuits are further configured to transmit a request to the second RNC to delete the first call leg, and receive a response from the second RNC that indicates a predetermined communication link delay for the second base station. This could include the delay D5 in the fourth scenario above, for example. The one or more processing circuits are further configured to perform transport channel synchronization for the wireless terminal based on a set of communication link delays that includes the predetermined communication link delay for the second base station. The predetermined communication link delay is predetermined prior to the transmission of the request.

In some embodiments, the request and response are transmitted over an lur interface between the first and second RNCs, and each communication link delay is an lub interface delay. In some embodiments, the request is a RNSAP request, and the response is a RNSAP response.

As in the examples discussed above, the performance of transport channel synchronization could include determining a maximum of the communication link delays in the set; and performing one or both of: adjusting a CFN of the first RNC based on the maximum delay, and adjusting a transmission time of a data frame that is transmitted from the first RNC based on the maximum delay.

In one or more embodiments, if three or more call legs of the call are supported by the second RNC (e.g., the DRNC 70), the indicated call leg is deleted, and the DRNC communication link delay received from the DRNC is for whichever of the remaining call legs of the DRNC that has the greatest communication link delay value.

The same RNC 600 may be configured to perform any combination of the methods 300, 400, 500, 600. In this regard, the RNC 600 may be a DRNC with respect to some wireless terminals, but a SRNC with respect to other wireless terminals. Thus, the same RNC 600 can simultaneously act as a SRNC and a DRNC with respect to different terminals. As such, the RNC 600 can be configured to implement a combination of the methods 200, 300, 400, 500. Alternatively, the RNC 600 could be configured to implement one of the methods 200, 300 400, 500.

The techniques discussed herein can provide a number of advantages compared to prior art synchronization techniques. In particular, the techniques discussed herein can reduce the delays caused by RTT calculations stemming from addition or deletion of a call leg. This, in turn, shortens the time required for performing transport channel synchronization when adding or deleting a radio link belonging to a DRNC. These techniques minimize the transmission delay and the buffering time when adding or deleting a radio link RL belonging to a DRNC. As a result of the decreased RTT, improved Transmission Control Protocol (TCP) throughput and voice quality can be achieved.

In heterogeneous networks, also known as "HetNets," a combination of macro cells and non-macro cells are used. As discussed above, this may mean that a large variation between transport network delays is present. The techniques discussed herein provide for a smooth interaction between macro and HetNet networks that may exhibit varying transport characteristics, with seamless operation transitions between them, while maintaining service continuity and minimizing RTT time. Of course, it is understood that HetNets are not required, and that the techniques discussed herein may be useful in macro cells even if no non-macro cells are used. Application WO 2014/070053 discussed a method of determining communication link delays in the background, before they were actually needed for performing transport channel synchronization, and then using the determined communication link delays when they were needed at new radio link establishment. However, the '053 application only disclosed performing this within by a single RNC within its own RNS. There were no teachings related to applying these techniques such that the predetermined delays were shared across more than one RNC or more than one RNS. Extending the teachings of the '053 patent to other RNCs / RNSs could have meant that a single RNC would query not only its own base stations but also those of the other RNSs when performing RTT calculations to determine a very large set of communication link delays, which could be impractical because the number of base stations involved would increase enormously when the RNC is connected to other RNCs over lur links. Moreover, such inquiries would impose a large processing demand and would consume considerable capacity on the lub / lur links, especially when a given RNC can be connected to a large number of base stations (a number which increases with the deployment of non-macro base stations). The techniques discussed herein avoid those issues by having each RNC predetermine values for its own respective base stations (not those of other RNCs), and then when the delay for a base station supported by another RNC is needed, obtaining that predetermined value from the other RNC (e.g., using RNSAP signaling).

The present disclosure may, of course, be carried out in other ways than those specifically set forth herein without departing from essential characteristics of the present disclosure. The present embodiments are to be considered in all respects as illustrative and not restrictive, and all changes coming within the meaning and equivalency range of the appended claims are intended to be embraced therein.

## Claims

1. A method (200) implemented by a first Radio Network Controller (RNC) **characterized by**:
determining (202) a communication link delay of an lub interface between the first RNC and a base station supported by the first RNC;
subsequent to the determining (202), receiving (204) a request from a different, second RNC to add a call leg that includes the base station for a call supported by the second RNC; and
based on the request (204), transmitting (206) a response to the second RNC that indicates the determined communication link delay.

2. The method (200) of claim 1:
wherein the determining (202) is performed to determine a communication link delay for each of a plurality of base stations supported by the first RNC; and
wherein the response includes the determined communication link delay for each base station that is supported by the first RNC and that is identified in the request, and excludes the determined communication link delay for each base station that is supported by the first RNC but is not identified in the request.

3. The method (200) of any one of claims 1-2:
wherein the request and response are transmitted over an lur interface between the first and second RNCs; and
wherein each communication interface delay is an lub interface delay.

4. The method (200) of any one of claims 1-3, wherein the request is a Radio Network Subsystem Application Part (RNSAP) request, and the response is a RNSAP response.

5. The method (200) of any one of claims 1-4, wherein one or more of the plurality of base stations are non-macro base stations that support respective small cells.

6. The method (200) of any one of claims 1-5, wherein the first RNC acts as a drift RNC (DRNC) with respect to a soft handover from the second RNC.

7. A method (300) implemented by a first Radio Network Controller (RNC) **characterized by**:
transmitting (302) a request from the first RNC to a different, second RNC to add a call leg that includes a base station supported by the second RNC for a call of a wireless terminal supported by the first RNC;
receiving (304) a response from the second RNC that indicates a predetermined communication link delay of an lub interface between the second RNC and the base station; and
performing (306) transport channel synchronization for the wireless terminal based on a set of communication link delays that includes the predetermined communication link delay;
wherein the predetermined communication link delay is predetermined prior to the transmitting.

8. The method (300) of claim 7, further **characterized by**:
determining one or more additional communication link delays, each corresponding to a communication link of a respective base station supported by the first RNC that is part of a call leg of the call;
wherein the determining is performed prior to the transmitting; and
wherein the one or more additional communication link delays are included in the set of communication link delays.

9. The method (300) of any one of claims 7-8, wherein performing transport channel synchronization (306) is **characterized by**:
determining a maximum of the communication link delays in the set; and
performing one or both of:
adjusting a connection frame number (CFN) of the first RNC based on the maximum delay; and
adjusting a transmission time of a data frame that is transmitted from the first RNC based on the maximum delay.

10. The method (300) of any one of claims 7-9:
wherein the request and response are transmitted over an lur interface between the first and second RNCs; and
wherein each communication interface delay is an lub interface delay.

11. The method (300) of claim 10, further **characterized by**:
adding a predefined lur interface delay of the lur interface between the first and second RNCs to the communication link delay for the base station supported by the second RNC to determine a modified communication link delay for the base station supported by the second RNC;
wherein determining the maximum of the communication link delays is performed based on the modified communication link delay.

12. A first Radio Network Controller (RNC) (600, 70) **characterized by**:
a memory circuit (604); and
one or more processing circuits (602) configured to:
determine a communication link delay of an lub interface between the first RNC and a base station (72) supported by the first RNC (600, 70);
store the determined communication link delay in the memory circuit (604);
subsequent to the determination of the communication link delay, receive a request from a different, second RNC (62) to add a call leg that includes the base station (72) for a call supported by the second RNC (62); and
based on the request, transmit a response to the second RNC (62) that indicates the determined communication link delay.

13. The first RNC (600, 70) of claim 12:
wherein the one or more processing circuits (602) are further configured to determine a communication link delay of an lub interface between the first RNC and each of a plurality of base stations (72A-B) supported by the first RNC (600, 70); and
wherein the response includes the determined communication link delay for each base station (72) that is supported by the first RNC (600, 70) and that is identified in the request, and excludes the determined communication link delay for each base station (72) that is supported by the first RNC (600, 70) but is not identified in the request.

14. A first Radio Network Controller (RNC) (600, 62) **characterized by**:
a memory circuit (604) configured to store communication link delays; and
one or more processing circuits (602) configured to:
transmit a request from the first RNC (600, 70) to a different, second RNC (70) to add a call leg that includes a base station (72) supported by the second RNC (70) for a call of a wireless terminal (74) supported by the first RNC (600, 62);
receive a response from the second RNC (70) that indicates a predetermined communication link delay of an lub interface between the first RNC and the base station (72); and
perform transport channel synchronization for the wireless terminal (74) based on a set of communication link delays that includes the predetermined communication link delay;
wherein the predetermined communication link delay is predetermined prior to the transmission of the request.

15. The first RNC (600, 62) of claim 14:
wherein the one or more processing circuits (602) are further configured to determine one or more additional communication link delays, each corresponding to a communication link of a respective base station (64) supported by the first RNC (600, 62) that is part of a call leg of the call; and
wherein the determination of the one or more additional communication link delays is performed prior to the transmission of the request; and
wherein the one or more additional communication link delays are included in the set of communication link delays.

## Patentansprüche

1. Verfahren (200), das in einer ersten Funknetzsteuerungseinheit (RNC) umgesetzt und durch Folgendes gekennzeichnet ist:
Bestimmen (202), einer Kommunikationsverbindungsverzögerung einer lub-Schnittstelle zwischen der ersten RNC und einer Basisstation, die durch die erste RNC unterstützt wird;
anschließend an das Bestimmen (202), Empfangen (204) einer Anfrage von einer anderen zweiten RNC, einen Anrufzweig, der die Basisstation beinhaltet, für einen Anruf, der durch die zweite RNC unterstützt wird, hinzuzufügen; und
auf Grundlage der Anfrage (204), Übermitteln (206) einer Antwort an die zweite RNC, welche die bestimmte Kommunikationsverbindungsverzögerung angibt.

2. Verfahren (200) nach Anspruch 1:
wobei das Bestimmen (202) durchgeführt wird, um eine Kommunikationsverbindungsverzögerung für jede einer Vielzahl von Basisstationen, die durch die erste RNC unterstützt wird, zu bestimmen; und
wobei die Antwort die bestimmte Kommunikationsverbindungsverzögerung für jede Basisstation, die durch die erste RNC unterstützt wird und in der Anfrage identifiziert ist, einschließt und die bestimmte Kommunikationsverbindungsverzögerung für jede Basisstation, die durch die erste RNC unterstützt wird aber nicht in der Anfrage identifiziert ist, ausschließt.

3. Verfahren (200) nach einem der Ansprüche 1-2:
wobei die Anfrage und die Antwort über eine lur-Schnittstelle zwischen der ersten und der zweiten RNC übermittelt wird; und
wobei jede Kommunikationsschnittstellenverzögerung eine lub-Schnittstellenverzögerung ist.

4. Verfahren (200) nach einem der Ansprüche 1-3, wobei die Anfrage eine RNSAP-Anfrage (Anfrage via Radio Network Subsystem Application Part) ist und die Antwort eine RNSAP-Antwort ist.

5. Verfahren (200) nach einem der Ansprüche 1-4, wobei eine oder mehrere der Vielzahl von Basisstation keine Makrobasisstationen sind, die entsprechend kleine Zelle unterstützen.

6. Verfahren (200) nach einem der Ansprüche 1-5, wobei die erste RNC in Bezug auf eine sanfte Übergabe von der zweiten RNC als eine Drift-RNC (DRNC) fungiert.

7. Verfahren (300), das in einer ersten Funknetzsteuerungseinheit (RNC) umgesetzt und durch Folgendes gekennzeichnet ist:
Übermitteln (302) einer Anfrage von der ersten RNC an eine andere zweite RNC, um einen Anrufzweig, der eine durch die zweite RNC unterstützte Basisstation beinhaltet, für einen Anruf eines drahtlosen Endgeräts, das durch die erste RNC unterstützt wird, hinzuzufügen;
Empfangen (304), einer Antwort von der zweiten RNC, die eine vorbestimmte Kommunikationsverbindungsverzögerung einer lub-Schnittstelle zwischen der zweiten RNC und der Basisstation angibt; und
Durchführen (306) von Transportkanalsynchronisation für das drahtlose Endgerät auf Grundlage eines Satzes von Kommunikationsverbindungsverzögerungen, der die vorbestimmte Kommunikationsverbindungsverzögerung beinhaltet;
wobei die vorbestimmte Kommunikationsverbindungsverzögerung vor dem Übermitteln vorbestimmt wird.

8. Verfahren (300) nach Anspruch 7, das ferner durch Folgendes gekennzeichnet ist:
Bestimmen einer oder mehrerer zusätzlicher Kommunikationsverbindungsverzögerungen, die jeweils einer Kommunikationsverbindung einer entsprechenden Basisstation entsprechen, die durch die erste RNC unterstützt wird, welche Teil eines Anrufzweigs des Anrufs ist;
wobei das Bestimmen vor dem Übermitteln durchgeführt wird; und
wobei die eine oder mehreren zusätzlichen Kommunikationsverbindungsverzögerungen in dem Satz von Kommunikationsverbindungsverzögerungen enthalten sind.

9. Verfahren (300) nach einem der Ansprüche 7-8, wobei das Durchführen von Transportkanalsynchronisation (306) durch Folgendes gekennzeichnet ist:
Bestimmen eines Maximums der Kommunikationsverbindungsverzögerungen in dem Satz; und
Durchführen von einem oder beiden des Folgenden:
Anpassen einer Verbindungsframenummer (CFN) der ersten RNC auf Grundlage der maximalen Verzögerung; und
Anpassen einer Übermittlungszeit eines Verbindungsframes, der von der ersten RNC übermittelt wird, auf Grundlage der maximalen Verzögerung.

10. Verfahren (300) nach einem der Ansprüche 7-9:
wobei die Anfrage und die Antwort über eine lur-Schnittstelle zwischen der ersten und zweiten RNC übermittelt wird; und
wobei jede Kommunikationsverbindungsverzögerung eine lub-Schnittstellenverzögerung ist.

11. Verfahren (300) nach Anspruch 10, das ferner durch Folgendes gekennzeichnet ist:
Hinzufügen einer vordefinierten lur-Schnittstellenverzögerung der lur-Schnittstelle zwischen der ersten und der zweiten RNC zu der Kommunikationsverbindungsverzögerung für die Basisstation, die durch die zweite RNC unterstützt wird, um eine modifizierte Kommunikationsverbindungsverzögerung für die Basisstation zu bestimmen, die durch die zweite RNC unterstützt wird;
wobei das Bestimmen des Maximums der Kommunikationsverbindungsverzögerungen auf Grundlage der modifizierten Kommunikationsverbindungsverzögerung durchgeführt wird.

12. Erste Funknetzsteuerungseinheit (RNC) (600, 70), die durch Folgendes gekennzeichnet ist:
eine Speicherschaltung (604); und
eine oder mehrere Verarbeitungsschaltungen (602), die zu Folgendem konfiguriert sind:
Bestimmen einer Kommunikationsverbindungsverzögerung einer lub-Schnittstelle zwischen der ersten RNC und einer Basisstation (72), die durch die erste RNC (600, 70) unterstützt wird;
Speichern der bestimmten Kommunikationsverbindungsverzögerung in der Speicherschaltung (604);
anschließend an die Bestimmung der Kommunikationsverbindungsverzögerung, Empfangen einer Anfrage von einer anderen zweiten RNC (62), einen Anrufzweig, der die Basisstation (72) beinhaltet, für einen Anruf, der durch die zweite RNC (62) unterstützt wird, hinzuzufügen; und
auf Grundlage der Anfrage, Übermitteln einer Antwort an die zweite RNC (62), welche die bestimmte Kommunikationsverbindungsverzögerung angibt.

13. Erste RNC (600, 70) nach Anspruch 12:
wobei die eine oder mehreren Verarbeitungsschaltungen (602) ferner dazu konfiguriert sind, eine Kommunikationsverbindungsverzögerung einer lub-Schnittstelle zwischen der ersten RNC und jeder einer Vielzahl von Basisstationen (72A-B), die durch die erste RNC (600, 70) unterstützt werden, zu bestimmen; und
wobei die Antwort die bestimmte Kommunikationsverbindungsverzögerung für jede Basisstation (72), die durch die erste RNC (600, 70) unterstützt wird und in der Anfrage identifiziert ist, einschließt und die bestimmte Kommunikationsverbindungsverzögerung für jede Basisstation (72), die durch die erste RNC (600, 70) unterstützt wird aber nicht in der Anfrage identifiziert ist, ausschließt.

14. Erste Funknetzsteuerungseinheit (RNC) (600, 62), die durch Folgendes gekennzeichnet ist:
eine Speicherschaltung (604), die dazu konfiguriert ist, Kommunikationsverbindungsverzögerungen zu speichern; und
eine oder mehrere Verarbeitungsschaltungen (602), die zu Folgendem konfiguriert sind:
Übermitteln einer Anfrage von der ersten RNC (600, 70) an eine andere zweite RNC (70), um einen Anrufzweig, der eine durch die zweite RNC (70) unterstützte Basisstation (72) beinhaltet, für einen Anruf eines drahtlosen Endgeräts (74), das durch die erste RNC (600, 62) unterstützt wird, hinzuzufügen;
Empfangen einer Antwort von der zweiten RNC (70), die eine vorbestimmte Kommunikationsverbindungsverzögerung einer lub-Schnittstelle zwischen der ersten RNC und der Basisstation (72) angibt; und
Durchführen von Transportkanalsynchronisation für das drahtlose Endgerät (74) auf Grundlage eines Satzes von Kommunikationsverbindungsverzögerungen, der die vorbestimmte Kommunikationsverbindungsverzögerung beinhaltet;
wobei die vorbestimmte Kommunikationsverbindungsverzögerung vor dem Übermitteln vorbestimmt wird.

15. Erste RNC (600, 62) nach Anspruch 14:
wobei die eine oder mehreren Verarbeitungsschaltungen (602) ferner dazu konfiguriert sind, eine oder mehrere zusätzliche Kommunikationsverbindungsverzögerungen zu bestimmen, die jeweils einer Kommunikationsverbindung einer jeweiligen Basisstation (64), die durch die erste RNC (600, 62) unterstützt wird, die Teil eines Anrufzweigs des Anrufs ist, entsprechen; und
wobei die Bestimmung der einen oder mehreren zusätzlichen Kommunikationsverbindungsverzögerungen vor dem Übermitteln der Anfrage durchgeführt wird; und
wobei die eine oder mehreren zusätzlichen Kommunikationsverbindungsverzögerungen in dem Satz von Kommunikationsverbindungsverzögerungen enthalten sind.

## Revendications

1. Procédé (200) mis en œuvre par un premier contrôleur de réseau radio (RNC) **caractérisé par** :
la détermination (202) d'un retard de liaison de communication d'une interface lub entre le premier RNC et une station de base prise en charge par le premier RNC ;
après la détermination (202), la réception (204) d'une demande d'un second RNC différent pour ajouter un tronçon d'appel qui comporte la station de base pour un appel pris en charge par le second RNC ; et
sur la base de la demande (204), la transmission (206) d'une réponse au second RNC qui indique le retard de liaison de communication déterminé.

2. Procédé (200) selon la revendication 1:
dans lequel la détermination (202) est effectuée pour déterminer un retard de liaison de communication pour chacune d'une pluralité de stations de base prises en charge par le premier RNC ; et
dans lequel la réponse comporte le retard de liaison de communication déterminé pour chaque station de base qui est prise en charge par le premier RNC et qui est identifiée dans la demande, et exclut le retard de liaison de communication déterminé pour chaque station de base qui est prise en charge par le premier RNC mais qui n'est pas identifiée dans la demande.

3. Procédé (200) selon l'une quelconque des revendications 1 à 2 :
dans lequel la demande et la réponse sont transmises sur une interface lur entre les premier et second RNC ; et
dans lequel chaque retard d'interface de communication est un retard d'interface lub.

4. Procédé (200) selon l'une quelconque des revendications 1 à 3, dans lequel la demande est une demande de partie d'application de sous-système de réseau radio (RNSAP), et la réponse est une réponse RNSAP.

5. Procédé (200) selon l'une quelconque des revendications 1 à 4, dans lequel l'une ou plusieurs de la pluralité de stations de base sont des stations de base non-macro qui prennent en charge de petites cellules respectives.

6. Procédé (200) selon l'une quelconque des revendications 1 à 5, dans lequel le premier RNC agit comme un RNC de dérive (DRNC) par rapport à un transfert intercellulaire sans coupure du second RNC.

7. Procédé (300) mis en œuvre par un premier contrôleur de réseau radio (RNC) **caractérisé par** :
la transmission (302) d'une demande du premier RNC à un second RNC différent pour ajouter un tronçon d'appel qui comporte une station de base prise en charge par le second RNC pour un appel d'un terminal sans fil pris en charge par le premier RNC ;
la réception (304) d'une réponse du second RNC qui indique un retard de liaison de communication prédéterminé d'une interface lub entre le second RNC et la station de base ; et
la réalisation (306) d'une synchronisation de canal de transport pour le terminal sans fil sur la base d'un ensemble de retards de liaison de communication qui comporte le retard de liaison de communication prédéterminé ;
dans lequel le retard de liaison de communication prédéterminé est prédéterminé avant la transmission.

8. Procédé (300) selon la revendication 7, **caractérisé en outre par** :
la détermination d'un ou de plusieurs retards de liaison de communication supplémentaires, chacun correspondant à une liaison de communication d'une station de base respective prise en charge par le premier RNC qui fait partie d'un tronçon d'appel de l'appel ;
dans lequel la détermination est réalisée avant la transmission ; et
dans lequel les un ou plusieurs retards de liaison de communication supplémentaires sont inclus dans l'ensemble de retards de liaison de communication.

9. Procédé (300) selon l'une quelconque des revendications 7 à 8, dans lequel la réalisation d'une synchronisation de canal de transport (306) est **caractérisée par** :
la détermination d'un maximum des retards de liaison de communication dans l'ensemble ; et
la réalisation de l'un ou des deux :
du réglage d'un numéro de trame de connexion (CFN) du premier RNC sur la base du retard maximum ; et
du réglage d'un temps de transmission d'une trame de données qui est transmise à partir du premier RNC sur la base du retard maximum.

10. Procédé (300) selon l'une quelconque des revendications 7 à 9 :
dans lequel la demande et la réponse sont transmises sur une interface lur entre les premier et second RNC ; et
dans lequel chaque retard d'interface de communication est un retard d'interface lub.

11. Procédé (300) selon la revendication 10, **caractérisé en outre par** :
l'ajout d'un retard d'interface lur prédéfini de l'interface lur entre les premier et second RNC au retard de liaison de communication pour la station de base prise en charge par le second RNC pour déterminer un retard de liaison de communication modifié pour la station de base prise en charge par le second RNC ;
dans lequel la détermination du maximum des retards de liaison de communication est réalisée sur la base du retard de liaison de communication modifié.

12. Premier contrôleur de réseau radio (RNC) (600, 70) **caractérisé par** :
un circuit de mémoire (604) ; et
un ou plusieurs circuits de traitement (602) configurés pour :
déterminer un retard de liaison de communication d'une interface lub entre le premier RNC et une station de base (72) prise en charge par le premier RNC (600, 70) ;
stocker le retard de liaison de communication déterminé dans le circuit de mémoire (604) ;
après la détermination du retard de liaison de communication, recevoir une demande d'un second RNC différent (62) pour ajouter un tronçon d'appel qui comporte la station de base (72) pour un appel pris en charge par le second RNC (62) ;et
sur la base de la demande, transmettre une réponse au second RNC (62) qui indique le retard de liaison de communication déterminé.

13. Premier RNC (600, 70) selon la revendication 12 :
dans lequel les un ou plusieurs circuits de traitement (602) sont en outre configurés pour déterminer un retard de liaison de communication d'une interface lub entre le premier RNC et chacune d'une pluralité de stations de base (72A-B) prises en charge par le premier RNC (600, 70) ; et
dans lequel la réponse comporte le retard de liaison de communication déterminé pour chaque station de base (72) qui est prise en charge par le premier RNC (600, 70) et qui est identifiée dans la demande, et exclut le retard de liaison de communication déterminé pour chaque station de base (72) qui est prise en charge par le premier RNC (600, 70) mais n'est pas identifiée dans la demande.

14. Premier contrôleur de réseau radio (RNC) (600, 62) **caractérisé par** :
un circuit de mémoire (604) configuré pour stocker des retards de liaison de communication ; et
un ou plusieurs circuits de traitement (602) configurés pour :
transmettre une demande du premier RNC (600, 70) à un second RNC (70) différent pour ajouter un tronçon d'appel qui comporte une station de base (72) prise en charge par le second RNC (70) pour un appel d'un terminal sans fil (74) pris en charge par le premier RNC (600, 62) ;
recevoir une réponse du second RNC (70) qui indique un retard de liaison de communication prédéterminé d'une interface lub entre le premier RNC et la station de base (72) ; et
réaliser une synchronisation de canal de transport pour le terminal sans fil (74) sur la base d'un ensemble de retards de liaison de communication qui comporte le retard de liaison de communication prédéterminé ;
dans lequel le retard de liaison de communication prédéterminé est prédéterminé avant la transmission de la demande.

15. Premier RNC (600, 62) selon la revendication 14 :
dans lequel les un ou plusieurs circuits de traitement (602) sont en outre configurés pour déterminer un ou plusieurs retards de liaison de communication supplémentaires, chacun correspondant à une liaison de communication d'une station de base respective (64) prise en charge par le premier RNC (600, 62) qui fait partie d'un tronçon d'appel de l'appel ; et
dans lequel la détermination des un ou plusieurs retards de liaison de communication supplémentaires est réalisée avant la transmission de la demande ; et
dans lequel les un ou plusieurs retards de liaison de communication supplémentaires sont inclus dans l'ensemble de retards de liaison de communication.
